# EUROPEAN PATENT APPLICATION

(11) **EP 1 281 318 A2**
(43) Date of publication of application: **05.02.2003**
(21) Application number: 02254736.8
(22) Date of filing: 05.07.2002
(51) Int. Cl.: A01K 97/06

(54) **A dispenser for dispensing angling line**

(30) Priority: 03.08.2001 GB 0119034
(71) Applicant: Fox Design International Limited, Hainault, Essex 1G6 3UT (GB)
(72) Inventor: Fox, Clifford Royston, Chelmsford, Essex CM3 8HQ (GB)
(74) Representative: Crouch, David John

(57) **Abstract**

A dispenser for dispensing angling line comprising a container (10) which contains a spool (40) around which such line is wound when the dispenser is in use so that the spool (40) is rotatable within the container (10). The container (10) is provided with an aperture (50) through which such line can be pulled to unwind it from the spool (40). The dispenser is provided with resistance means (60) which serve to resist any torque applied to the spool (40) by virtue of any resilience in the line when the dispenser is in use.

## Description

The present invention relates to a dispenser for dispensing angling line comprising a container which contains a spool around which such line is wound when the dispenser is in use so that the spool is rotatable within the container, the container being provided with an aperture through which such line can be pulled to unwind it from the spool.

Such dispensers which have been proposed hitherto have suffered the disadvantage that any resilience in the line giving it a tendency to straighten itself will cause the line to unravel, possibly even to the extent of pulling itself back through the aperture so that it is no longer possible, without opening up the container, to pull out further lengths of the line through that aperture for subsequent use.

The present invention seeks to obviate this drawback.

Accordingly, the present invention is directed to a dispenser having the construction set out in the opening paragraph of the present specification, in which the dispenser is provided with resistance means which serve to resist any torque applied to the spool by virtue of any resilience in the line when the dispenser is in use.

The dispenser may include such a spool.

Preferably, the resistance means comprise at least a portion which is resilient, for example, a tongue having a resilient base.

The tongue may be formed on the spool, so that it is urged against a wall of the housing. Alternatively, it may be formed on the housing, so that it is urged against the spool.

The resistance means may be formed integrally with the housing and/or the spool.

A cutter may be provided on the dispenser spaced from the aperture.

The dispenser may also be provided with a surface which may be recessed to receive a label.

The surface may be provided between the aperture and the cutter.

A lid of the dispenser may be provided over the aperture.

The lid may therefore also extend over the surface for a label. In that case it is desirable for at least a portion of the lid to be transparent to enable the label to be viewed when the lid is shut.

An example of a dispenser made in accordance with the present invention will now be described with reference to the accompanying drawings, in which:
- Figure 1: shows a perspective of a container part of the dispenser in an opened-up condition viewing in particular mainly the internal surfaces thereof;
- Figure 2: shows the container shown in Figure 1 also in an open condition, on the other side to show mainly the outer surfaces of the container;
- Figure 3: is a perspective view of the container shown in Figures 1 and 2 in a closed-up condition;
- Figure 4: shows the container as shown in Figure 3, but with just the lid in the open condition; and
- Figures 5a and 5b: show respective front and side views of a spool for the container shown in Figures 1 to 4.

The dispenser shown in the Figures comprises a container 10 which is made of a single piece of injection moulded plastics material so that it has a rear wall 12 from opposite edges of each extend respective side walls 14 and 16 generally at right angles to the rear wall 12. Extending along a bottom edge of the rear wall 12 between the bottoms of the side walls 14 and 16 is a half-portion 18 of a bottom wall of the container, having substantially half the depth of the side walls 14 and 16. This is connected to a second half-portion 20 of the bottom wall of the container by way of a thinned portion 22 which is sufficiently thin to act as a hinge between the two half-portions 18 and 20. A front wall 24 of the container extends at right angles to the half portion 20, and has an upper wall 26 having substantially the same depth as the side walls 14 and 16 and being generally parallel to the half-portion 20.

The container is also provided with a lid 28 attached to the intended top edge of the wall 12 of the dispenser by way of a further thinned portion 30 which is sufficiently thin to act as a hinge between the lid 28 and the rear wall 12. The lid 28 is provided with a substantially transparent window 32.

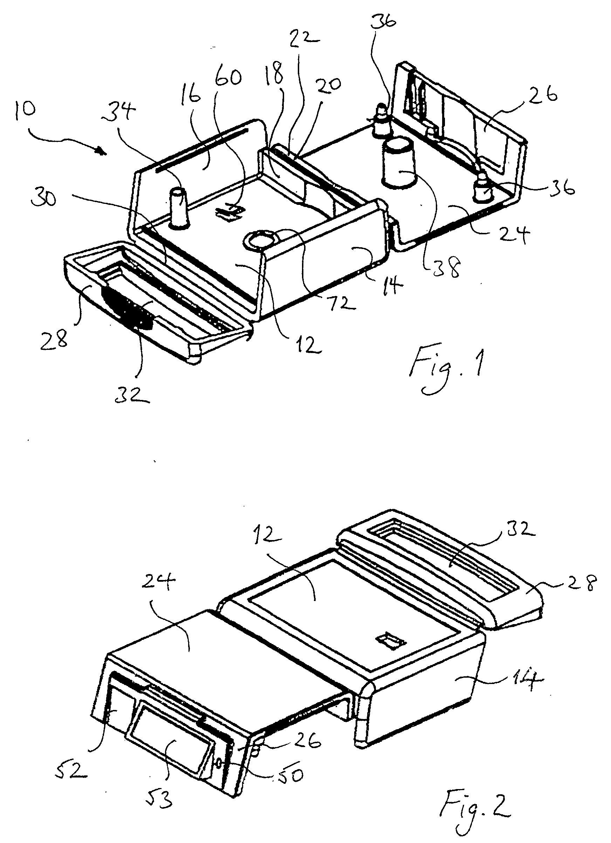

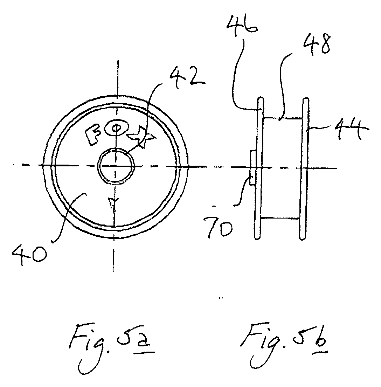

Two tubular portions 34 (only one of which is visible in Figure 1) extend inwardly from the interior of the rear wall 12 by a distance which is about half the depth of the side walls 14, and correspondingly two spigots 36 extend inwardly from the inner side of the front wall 24. The tubular portions 34 and the spigots 36 are positioned correspondingly so that when the front wall 24 is flipped over towards the rear wall 12 by means of the hinge 22, the spigots 36 are brought into registration with the tubular portion 34 and further hand pressure causes the spigots 36 to snap into the tubular portion 34, to hold the container in a closed condition, as shown in Figure 4.

The container 10 is provided with a spigot 38 extending inwardly from the interior of the front wall 24. A spool 40 of the dispenser shown in Figures 5a and 5b is generally circular, having a through-hole 42 at its centre and two flanges 44 and 46 on its opposite flat main sides. The spool 40 may carry a hook line 48 wound around it and, with such hook line, it may be placed in the container 10 by inserting the spigot 38 through the hole 42.

The upper wall 26 is provided with an aperture 50 through which a free end of the line 48 may be threaded whereupon the dispenser may be closed-up as shown in Figure 4. Also provided on the outside of the upper wall 26 of the container 10, spaced apart from the aperture 50, is a cutter 52 so that a length of a line 48 can be pulled through the aperture 50 and then tugged against the cutter 52 so that a suitable length of the line is cut from the main part remaining on the spool.

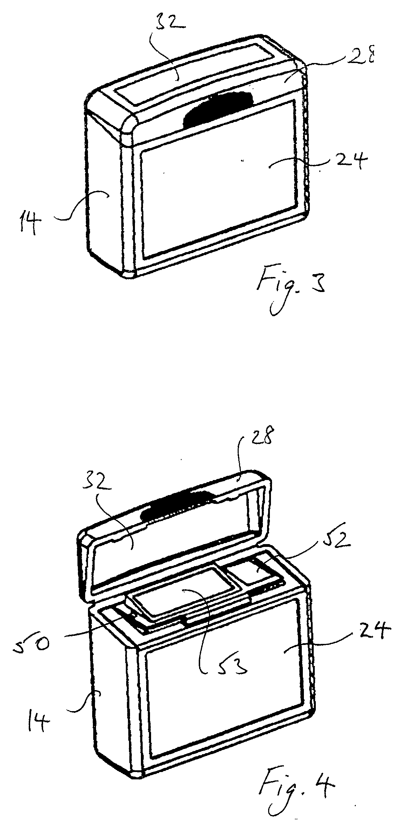

A recessed surface 53 is also provided on the upper side of the upper wall 26 of the container 10 at a slight angle thereto to facilitate the reading of a label (not shown) which may be inserted in the recessed surface 53. This label may still be read even when the lid 28 is snapped shut as shown in Figure 3, by virtue of the window 32.

A tongue 60 with a resilient base or root is formed integrally with the material of the container to extend inwardly on a slant from its root which is on the interior of the wall 12 itself, to a free end which is positioned somewhat inwardly of the inside surface of the wall 12. As a result, it is urged resiliently against one of the main outer faces of the spool 40 when the latter is inserted in the container 10 and resists rotation of that spool. The degree of resistance is such as to enable the line 48 on the spool 40 to be readily pulled through the aperture 50 by hand strength, but at the same time is sufficient to prevent resilience in the hook line 48 from causing rotation of the spool 40, thereby to inhibit any tendency for the line 48 to unravel itself.

The spool 40 is provided with an annular portion 70 on one of its sides around the aperture 42 and the inside of the rear wall 12 is provided with an annular ring 72. These annular rings assist in ensuring smooth rotation of the spool within the container 10.

Many variations and modifications to the illustrated dispenser may occur to the reader without taking the resulting construction outside the scope of the present invention. For example, the tongue 60 could be provided on the spool 40 so that, for example, it extends outwardly from one of the main sides of the spool and so that when the spool is inserted in the manner described in the container 10, it is urged against the inside surface of the front wall 24 or, alternatively, the rear wall 12.

It will be noted that the illustrated dispenser is provided with a surface for receiving a label, for example identifying the nature of the hook line or other line which is wound around a spool of the dispenser, this surface preferably being recessed, preferably being provided between an aperture and a cutter of the dispenser and preferably being covered by a lid at least a portion of which is transparent to enable the label to be read through the lid.

## Claims

1. A dispenser for dispensing angling line comprising a container (10) which contains a spool (40) around which such line is wound when the dispenser is in use so that the spool (40) is rotatable within the container (10), the container (10) being provided with an aperture (50) through which such line can be pulled to unwind it from the spool (40), **characterised in that** the dispenser is provided with resistance means (60) which serve to resist any torque applied to the spool (40) by virtue of any resilience in the line when the dispenser is in use.

2. A dispenser according to claim 1, **characterised in that** the dispenser includes such a spool (40).

3. A dispenser according to claim 1 or claim 2, **characterised in that** the resistance means (60) comprise at least a portion (60) which is resilient.

4. A dispenser according to claim 3, **characterised in that** the said portion comprises a tongue (60) having a resilient base.

5. A dispenser according to claim 4 read as appended to claims 2 and 3, **characterised in that** the tongue is formed on the spool (40), so that it is urged against a wall of the container (10).

6. A dispenser according to claim 4 read as appended to claims 2 and 3, **characterised in that** the tongue (60) is formed on the container (10), so that it is urged against the spool (40).

7. A dispenser according to claim 1 or claim 3, **characterised in that** the resistance means (60) is formed integrally with the container (10).

8. A dispenser according to claim 2 or claim 3 read as appended to claim 2, **characterised in that** the resistance means is formed integrally with the spool (40).

9. A dispenser according to any preceding claim, **characterised in that** a cutter (52) is provided on the dispenser spaced from the aperture (50).

10. A dispenser according to any preceding claim, **characterised in that** the dispenser is provided with a surface (53) which is recessed to receive a label.

11. A dispenser according to claim 10 read as appended to claim 9, **characterised in that** the surface (53) is provided between the aperture (50) and the cutter (52).

12. A dispenser according to any preceding claim, **characterised in that** the dispenser is provided with a lid (28) over the aperture (50).

13. A dispenser according to claim 12 read as appended directly or indirectly to claim 10, **characterised in that** the lid (28) also extends over the said surface (53) for a label.

14. A dispenser according to claim 13, **characterised in that** at least a portion (32) of the lid (28) is transparent to enable the label to be viewed when the lid (28) is shut.
